# EUROPEAN PATENT APPLICATION

(11) **EP 4 571 363 A1**
(43) Date of publication of application: **18.06.2025**
(21) Application number: 23216067.1
(22) Date of filing: 12.12.2023
(51) Int. Cl.: G01S 19/21

(54) **METHOD AND DEVICE FOR IDENTIFYING AUTHENTIC NAVIGATION SIGNALS**

(71) Applicant: Septentrio N.V., 3001 Leuven (BE)
(72) Inventor: SLEEWAEGEN, Jean-Marie, 1090 Brussels (BE); DE WILDE, Wim, 3050 Oud-Heverlee (BE)
(74) Representative: AWA Benelux

(57) **Abstract**

A method (20) of identifying an authentic navigation signal comprises detecting (21), in a sampled navigation signal, a plurality of correlation peaks for a pseudorandom noise code replica associated with a respective navigation beacon. Navigation messages (123) associated with the plurality of the correlation peaks are decoded (22). The navigation messages are authenticated (23). Based on a plurality of the navigation messages being found authentic, a range criterion is applied (25) to ranging measurements (124) determined from correlation peaks associated with the authentic navigation messages. The correlation peak associated with one of the authentic navigation messages passing the range criterion is selected as an authentic correlation peak. A device for identifying an authentic navigation signal comprises processing circuitry configured to carry out the above method.

## Description

### Technical field

The present invention is related to methods of detecting spoofing in navigation signals, particularly methods enabling to identify a navigation signal as authentic by distinguishing between spoofed and non-spoofed signals, and to devices, such as navigation receivers, configured to carry out such methods.

### Background art

Global Navigation Satellite Systems (GNSS) are satellite-based positioning systems that are widely used to provide position, velocity and time (PVT) to any user on or near the Earth's surface. A GNSS comprises, among other things, a constellation of multiple navigation satellites (GNSS satellites) which transmit dedicated navigation signals known as "ranging signals". Examples of GNSS include the Global Positioning System (GPS) developed by the United States, the European Galileo system, the Russian GLONASS and the Chinese BeiDou system.

The satellites of a satellite-based positioning system transmit navigation signals on radio-frequency carriers. The carriers are modulated by periodic pseudo-random (PRN) spreading codes that are unique to each satellite and by a navigation message consisting of a succession of navigation pages. The PRN code period is typically a multiple of one millisecond. For example, the PRN code of the Galileo E1 signal has a period of 4 ms and the navigation pages have a duration of 2 seconds.

The position, velocity and time (PVT) of a user is determined by measuring range and range rate from the user's position to at least 4 satellites whose position and time are accurately determined, the range being defined as the distance between the user and a satellite. The navigation message contains time stamps allowing to determine the time of signal transmission and obtain an unambiguous delay between the signal transmission by the satellite and its reception by the receiver. The pseudorange is computed by multiplying that delay by the speed of light. Instead of "range", the term "pseudorange" is preferred and is used hereafter, to account for a possible misalignment between the receiver and the satellite clocks.

The received signal comprises a Doppler-shifted and time-delayed version of the navigation signal transmitted from a particular navigation satellite. Because each navigation satellite has a different velocity and is at a different distance from the receiver, the Doppler shift and the time delay is satellite-dependent. Acquiring the navigation signal typically includes searching the Doppler shift and the time delay that maximizes a correlation between the signal captured by a receiver antenna and a local replica of the navigation signal of the particular satellite, i.e. finding the so-called correlation peak in the relevant Doppler/delay search space. In most cases, only one significant correlation peak is present in the Doppler/delay space. Under strong multipath conditions though, reflected signals may lead to additional correlation peaks at the same Doppler but larger delays as the line-of-sight (LOS) peak, as known in the art.

The PRN codes and the structure of the navigation message are public information, and it is relatively easy to forge GNSS-like signals that are difficult to distinguish from the navigation signals transmitted by authentic GNSS satellites. A spoofing attack consists in transmitting such forged signals in an attempt to deceive a target GNSS receiver. If the forged signal is stronger than the authentic satellite signal, the receiver is likely to acquire and track the forged signals and the computed PVT may be compromised.

In some attacks, the spoofer forges all the components of the navigation signal (PRN code, carrier, navigation data, ...) itself. Alternatively, in so-called meaconing attacks, the spoofer captures the authentic navigation signal and re-radiates it with some delay. In some cases, the navigation pages transmitted by the authentic navigation satellite may be predictable for a long period of time. For example, unpredictable changes in the content of the GPS L1 C/A navigation pages typically only occur every two hours. In other cases, the pages may all be unpredictable. For example, Galileo E1 navigation pages contain cryptographic data that make at least part of their content unpredictable, such that a meaconer cannot rebroadcast a single navigation page without having first extracted it from the authentic navigation satellite. A more advanced meaconing attack may involve extracting the navigation message from the authentic navigation satellite signals and forging a delayed signal with a different Doppler shift but with the same navigation message. The delay may vary from a few microseconds to seconds or even minutes.

In many cases, the authentic signal is still present in the radio frequency signal captured by a receiver, and the Doppler/Delay search space contains multiple correlation peaks, some corresponding with the authentic signal and its potential reflections, and some corresponding with the spoofing signal. Spoofing is successful if the receiver acquires and tracks the correlation peak corresponding with the spoofing signal and uses the corresponding ranging measurements in the PVT computations. Spoofing is ineffective if the receiver tracks the correlation peak corresponding with the authentic navigation signal. Spoofers usually attempt to adjust the transmit power of the spoofing signal so that their signal overpowers the genuine GNSS navigation signal at the target receiver's antenna, to increase the likelihood that the receiver acquires the spoofing correlation peak. To further increase the chance of success, so-called coherent spoofers initially generate their signal with the same Doppler and delay as the authentic navigation signal, before gradually shifting it away.

Known spoofing detection and mitigation techniques exploit the fact that the authentic correlation peak is still present even under spoofing attacks. F. Rothmaier et al., "GNSS Spoofing Mitigation in the Position Domain," Proceedings of the 2021 International Technical Meeting of The Institute of Navigation, January 2021, pp. 42-55, https://doi.org/10.33012/2021.17824, disclose a way to mitigate a spoofing attack by tracking two correlation peaks in parallel, thereby producing two pseudoranges per satellite, one of them being representative of the genuine signal, and the other of the spoofed signal. If N satellites are tracked, 2^{N} different combinations of pseudoranges must be presented to the PVT engine, and the most plausible combination is selected by the analysis of the residuals in the position computation. The identification of the authentic set of pseudoranges involves comparison with the output of an Inertial Measurement Unit (IMU). This mitigation technique is complex, the algorithm must be initialized during a period without spoofing, it cannot be applied on a satellite-per-satellite basis and it requires an external source of information.

US 10,983,220 discloses a technique to identify questionable signals having more than one correlation peak by assigning more than one channel to each satellite signal to receive and track the peaks of that satellite signal. Signals having more than one correlation peak are excluded from position and time calculations. Alternatively, the validity of questionable signals is determined based on their consistency with an approximate position provided externally or computed from a subset of non-questionable signals. This however requires the availability of an approximate position, i.e. that a sufficient number of satellites are not spoofed. In another technique disclosed in US 10,983,220, spoofing signals broadcasted for satellites that are below the horizon or that do not exist are detected, even though they have only one correlation peak. This is performed by downloading valid and certified almanac data from known sources to obtain the status of satellites, and signals that should not be received according to the almanac data are excluded from position and time calculations.

US 11,119,221 discloses a way to classify correlation peaks by comparing their respective time-of-arrival (TOA) to a specified time window. Correlation peaks having respective TOA within a specified time window are classified as legitimate. However, the TOA of at least two different satellites must be available to define the time window, with the assumption that at least one of these satellites is not spoofed. The time window is relatively wide (about 20ms), and spoofers producing signals falling within this wide time window cannot be detected.

In another technique to detect spoofing attacks known from EP 3056925, computed ranging measurements corresponding with a navigation signal from a navigation satellite are encrypted by a receiver and sent to an authentication centre along with a digital snapshot of the received radio signal having a temporal relation with the navigation signal from which the ranging measurements were computed. The authentication centre verifies the authenticity of the ranging measurements based on calculating navigation information based on the digital snapshot and comparing with the ranging measurements provided by the receiver. One drawback of this method is that it requires recording a snapshot of high-rate IF samples having a temporal relationship with the navigation signal, and requires a communication channel between receiver and an authentication centre.

The navigation messages transmitted from some satellites can be authenticated with some form of cryptographic authentication data. For example, the I/NAV navigation message transmitted on the Galileo E1 signal can be authenticated using Open Service Navigation Message Authentication (OSNMA), allowing receivers to authenticate the source of the navigation message. OSNMA adds a message authentication code (MAC) to the navigation data, which is function of the message of the satellite to be authenticated and of a secured message authentication key which is transmitted later and can hence not be predicted on the moment of reception of the authentication code. Other forms of navigation message authentication (NMA) authenticate the navigation message by transmitting a digital signature corresponding to this navigation message, which can be verified with a public key available to the user. The latter is used in Fugro's NMA method (US 11009608) and in planned services like the NMA service of GPS Chimera (IS-AGT-100). In some cases, the message authentication data is transmitted by the satellite to be authenticated (GALILEO OSNMA and Chimera self-authentication), while in other cases this data is provided via a different communication channel (e.g. GALILEO OSNMA cross-authentication via another GALILEO satellite, Fugro NMA via L-band or internet).

Spoofing detection capability is hence provided by detecting an invalid message authentication. I. Fernandez-Hernandez et al., "Galileo Authentication and High Accuracy: Getting to the Truth", Inside GNSS, 13 February 2023, https://insidegnss.com/galileo-authentication-and-high-accuracy-getting-to-the-truth/ discloses an OSNMA-based spoofing mitigation involving removing the satellites transmitting non-authentic signals from the PVT computation. The assumption is that enough authentic satellites remain to enable PVT. Oftentimes, this cannot be guaranteed. Another known shortcoming of such navigation message authentication (NMA) techniques is that they do not sufficiently protect against meaconing attacks, as meaconers replicate the authentic navigation message.

### Summary

There is hence still a need for an efficient and reliable way to identify, acquire and track the authentic correlation peak of a navigation signal.

According to a first aspect of the present disclosure, there is therefore provided a method of detecting spoofing in a navigation signal, and consequently a method of identifying an authentic navigation signal, as set out in the appended claims. The method can be implemented entirely in software, entirely in hardware, or in a combination of software and hardware.

Methods according to the first aspect comprise detecting, in a sampled navigation signal, a plurality of correlation peaks for a pseudorandom noise code replica associated with a respective navigation beacon, such as a navigation satellite. Navigation messages associated with the plurality of the correlation peaks are decoded. The navigation messages are authenticated, particularly to distinguish between authentic navigation messages, being the navigation messages having passed an authentication test, and spoofed navigation messages, being the navigation messages having failed the authentication test. At least based on a plurality of the navigation messages being found authentic, a range criterion is applied to ranging measurements determined from correlation peaks associated with the authentic navigation messages. The correlation peak associated with one of the authentic navigation messages passing the range criterion is selected as an authentic correlation peak. The range criterion advantageously relates to a test based on a shortest range and/or an earliest time of arrival of a portion of the navigation signal, e.g., associated with the authentic correlation peak.

The authentic correlation peak can be further tracked, which can comprise determining ranging measurements and decoding the associated navigation message. These ranging measurements and navigation message are advantageously output, e.g. to a data consumption process.

According to a second aspect of the present disclosure, there is provided a device for detecting spoofing in a navigation signal or for identifying an authentic navigation signal, as set out in the appended claims. The device comprises processing circuitry (hardware and/or implemented in computer program code) configured to carry out the methods according to the first aspect of the disclosure.

According to a third aspect of the present disclosure, there is provided a navigation receiver which comprises the device according to the second aspect, and advantageously further comprises a data consumption module configured to consume data output by the device according to the second aspect.

While methods for detecting spoofing of navigation signals are known to operate either based on a ranging criterion, or on navigation message authentication, spoofing detection and mitigation methods according to the present disclosure are based both on navigation message authentication and on the application of a range criterion. This particular combination provides improved effectiveness when multiple correlation peaks are found in respect of a particular navigation signal. Prior art methods simply exclude the navigation signal from PVT computations when the NMA check fails. Conversely, methods and devices according to the present disclosure, still allow to find the authentic correlation peak in such a signal in an efficient and reliable way. Methods and devices of the present disclosure mitigate the effects of spoofing in an efficient and reliable way based on the insight that: (i) the navigation messages decoded from different correlation peaks associated with a same navigation signal are not necessarily the same, allowing the correlation peaks failing an authentication test (e.g., producing invalid authentication data) to be excluded right away, and (ii) among the remaining correlation peaks, the authentic signal can still be easily found based on a ranging criterion applied to a ranging measurement determined from the correlation peak and corresponding navigation message. The navigation message authentication technique and the ranging criterion are not particularly limited and one may select from a variety of applicable NMA techniques and/or ranging criteria. The combination of these two tests enables to efficiently detect both forged navigation signals and meaconing signals and to mitigate spoofing by finding the correlation peak corresponding with the authentic navigation signal.

When tracking a correlation peak from a spoofer forging the navigation message itself, the NMA check will fail. However, when tracking a correlation peak from a meaconing attack, the NMA check will succeed. In such case, a suitable range criterion can be applied to the ranging measurements associated with different correlation peaks to discriminate between the authentic correlation peak and the correlation peak from a meaconing attack. For navigation messages comprising unpredictable bits, a meaconer needs to capture any non-predictable bit of the authentic navigation message first before replicating it, so that it can only produce a delayed version of the authentic signal. As a result, the pseudorange obtained from tracking the meaconing correlation peak will be larger than the pseudorange obtained from tracking the authentic navigation signal. In these examples, a shortest range criterion is suitable to find the authentic correlation peak.

A device according to the second or a further aspect of the present disclosure, comprises an acquisition module, a tracking module, an authenticator module and a selector module. The acquisition module is configured to receive, as input, a sampled navigation signal and to detect in the sampled navigation signal, a plurality of correlation peaks for a pseudorandom noise code replica associated with a respective navigation beacon, such as a navigation satellite. The tracking module is configured to track the plurality of correlation peaks, particularly to decode navigation messages associated with the plurality of correlation peaks and determine ranging measurements associated with the plurality of correlation peaks. The authenticator module is configured to authenticate the navigation messages, e.g. based on validating authentication data associated with the navigation messages. The selector module is configured to select the authentic correlation peak based on outputs of the tracking module and of the authenticator module. Advantageously, the selector module is configured to apply a range criterion on the ranging measurements associated with authenticated navigation messages.

Advantageously, in methods according to the present disclosure, detecting the plurality of correlation peaks and decoding and authenticating the navigation messages is performed continuously. These processes are advantageously performed irrespective of at least one of the navigations messages being found authentic, or irrespective of whether one of the plurality of correlation peaks is selected as the authentic correlation peak, i.e., irrespective of whether an authentic correlation peak is found. One advantage is that the method can switch to a better correlation peak as soon as a more authentic correlation peak is found, such as a correlation peak that improves the range criterion.

Advantageously, authenticating the navigation messages comprises, for each of the navigation messages, determining authentication data based on one or more attributes of the respective navigation message and validating the authentication data, such as based on a cryptographic key, which can be obtained from a data sequence obtained from the navigation signal or the navigation beacon, or from a source external to the navigation beacon.

Advantageously, decoding the navigation messages and optionally authenticating the navigation messages, is performed for the plurality of the correlation peaks in parallel. This favours speed of the method in identifying the authentic navigation signal. In such a case, the corresponding device advantageously comprises a plurality of tracking channels configured to track the plurality of correlation peaks in parallel. Alternatively, decoding the navigation messages and optionally authenticating the navigation messages, is performed for the plurality of the correlation peaks sequentially. This enables to implement present methods on existing navigation receiver architectures, which is a more economical solution. In such case, the corresponding device advantageously comprises a tracking channel and a monitoring channel.

The monitoring channel is configured to decode navigation messages and determine ranging measurements associated with the plurality of correlation peaks sequentially. The tracking channel is configured to track a first correlation peak, e.g. to decode the associated navigation message and to determine an associated ranging measurement. Particularly, the first correlation peak is a previous authentic correlation peak, e.g. as output by the monitoring channel in a previous operation. Advantageously, the tracking channel is configured to output the ranging measurement associated with the first correlation peak to a selector module, the selector module being configured to apply the range criterion to the ranging measurement output by the tracking channel and to the ranging measurements determined by the monitoring channel and to select the authentic correlation peak amongst the first correlation peak and the plurality of correlation peaks based on the range criterion being applied. Advantageously, based on the authentic correlation peak being different from the first correlation peak, the monitoring channel is configured to supply attributes associated with the (new) authentic correlation peak to the tracking channel, and the tracking channel is configured to track the (new) authentic correlation peak based on the attributes.

Advantageously, detecting the plurality of correlation peaks comprises scanning a Doppler shift and time delay search space associated with the navigation signal to determine correlation outputs. The correlation peaks are selected based on an amplitude of the correlation outputs exceeding a predetermined threshold, which may be fixed or variable. Advantageously, the Doppler shift and time delay search space is scanned from smaller time delays to larger time delays and for increasing values of Doppler shift. This enables to find the authentic correlation peak more speedily. Advantageously, a (first, predefined) window of the Doppler shift and time delay search space including, and possibly circumferential to or surrounding the authentic correlation peak is scanned continuously to determine correlation outputs. This enables to quickly react to the onset of coherent spoofing attacks. In addition, or alternatively, the Doppler shift and time delay search space outside the (first) window, such as in a second window non-overlapping with the first window, is scanned following scanning the first window. This enables to optimize detection of spoofed navigation signals.

### Brief description of the drawings

Aspects of the invention will now be described in more detail with reference to the appended drawings, wherein same reference numerals illustrate same features and wherein:
Figure 1 represents a diagram of a GNSS receiver;
Figure 2 represents a diagram of an acquisition and tracking channel of the GNSS receiver of Fig. 1;
Figure 3 represents a flowchart of a method for detecting spoofing in a navigation signal according to aspects of the present disclosure;
Figure 4 represents a diagram of an acquisition and tracking channel having parallel trackers and navigation message authenticator modules according to an aspect of the present disclosure;
Figure 5 represents a diagram of an acquisition and tracking channel having a central navigation message authenticator module according to another aspect of the present disclosure;
Figure 6 represents a graph of a Doppler shift versus time delay search space;
Figure 7 represents a diagram of an acquisition and tracking channel for sequential tracking of correlation peaks according to an aspect of the present disclosure;
Figure 8 represents a flowchart of the chain of operations of a monitoring channel according to aspects of the present disclosure;
Figure 9 represents a flowchart of the chain of operations of a tracking channel that is monitored by the monitoring channel of Fig. 8, according to aspects of the present disclosure.

### Detailed description

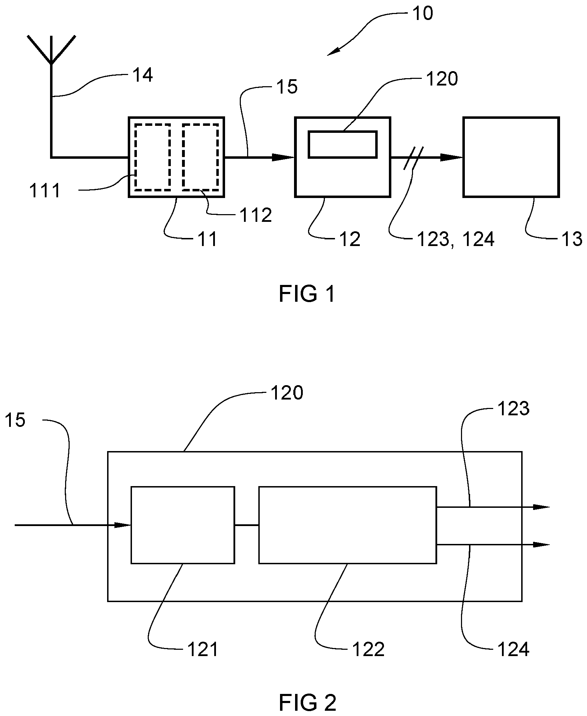

Referring to Fig. 1, a GNSS receiver 10 generally comprises a radio frequency (RF) antenna 14 coupled to a RF Frontend module 11, in which the signal received from the RF antenna 14 is amplified, filtered and downconverted to a suitable intermediate frequency (IF) in signal processing circuitry 111, and subsequently sampled in digital processing circuitry 112 to produce a sampled IF signal 15. Digital processing circuitry 112 can comprise analog to digital converter (ADC) circuitry to generate the sampled IF signal. It will be appreciated that any of signal amplification, filtering and downconverting in signal processing circuitry 111 can be performed on the sampled signal instead of the analog signal, i.e. any of this circuitry can be arranged in the processing chain of digital processing circuitry 112 instead. It will further be appreciated that the type and order of the various signal processing operations may vary based on receiver design.

The sampled IF signal 15, which can comprise navigation signals from different satellites, is fed to an acquisition and tracking (A/T) module 12. A/T module 12 can comprise one or more acquisition and tracking channels configured to find, in the IF signal 15, the navigation signal of a given satellite of interest and advantageously decode the corresponding navigation message. Multiple acquisition and tracking channels can each be allocated to a different navigation signal and/or satellite and can operate in parallel. Alternatively, one or more high-speed acquisition and tracking channels can process the IF signal 15 sequentially for different navigation signals and/or different satellites, e.g. in a time multiplexed manner.

Referring to Fig. 2, an acquisition and tracking (A/T) channel 120 comprises one or more acquisition modules 121 configured to perform so-called "signal acquisition" operations, including computing a correlation between the sampled IF signal 15 and Doppler-shifted (frequency-shifted) and/or time-shifted replicas of the PRN code of the satellite of interest. The signal acquisition operations comprise searching the Doppler shift and the time delay that maximizes the correlation, i.e. finding the so-called correlation peak in the relevant Doppler/delay search space. Typically, a correlation peak is found when its amplitude exceeds a predetermined threshold value.

The relevant search space depends on the information available to the receiver regarding its own position, speed and time offset, and the satellite's geometry. In a so-called "cold start", no information is available, and the search space covers all Doppler values that a GNSS signal can possibly take. Because the PRN codes are periodic functions, the correlation is a periodic function of the delay, and it suffices when the search space covers a single period of the code, e.g. 4 ms in the case of Galileo E1. If any a priori information is available, for example the approximate receiver and satellite position, the search space may be reduced and a correlation peak may be found more speedily.

When a correlation peak is found, "signal tracking" operations start. The Doppler shift and the time delay associated with the correlation peak are passed from the acquisition module 121 to the tracking module 122. In tracking module 122, a "tracker" is assigned to the correlation peak, its role being to track its position (Doppler shift and time delay) as it moves across the Doppler/delay space and to decode the bits of the navigation message NM. The bits are decoded from the sign of the correlation peak, with, for example, a positive sign being mapped to bit "0", and a negative sign being mapped to "1". As known in the art, tracking operations generally involve computing complex-valued "punctual", "early" and "late" correlations. A phase-lock loop (PLL) uses the punctual correlation to control the Doppler shift of the signal replica such that it is kept in phase with the received satellite signal. A delay-lock loop (DLL) uses the early and late correlations to maintain the punctual correlator synchronized with the signal delay.

Acquisition module 121 and tracking module 122 can share the same correlators, performing both acquisition and tracking operations. Alternatively, acquisition module 121 and tracking module 122 can comprise one or more dedicated correlators. In some examples, acquisition module 121 can comprise a large number of (parallel) correlators, each of them correlating the sampled IF signal with a signal replica having a different Doppler shift and/or time delay.

From the position of the correlation peak alone, the signal delay is only known modulo the PRN code period. The navigation message comprises time stamps allowing to resolve the ambiguity and obtain the unambiguous delay between the signal transmission by the satellite and its reception by the receiver. The pseudorange is computed by multiplying that delay by the speed of light. Instead of "range", the term "pseudorange" is used, to account for a possible misalignment between the receiver and the satellite clocks. In addition to the pseudorange, the tracker advantageously computes a carrier phase measurement, a range-rate measurement (Doppler) and/or a carrier-to-noise (C/N₀) measurement, being the ratio of signal power to noise power density. The tracker may additionally compute the time-of-arrival (TOA), referring to the time at which a certain pattern of the navigation signal (e.g. the first bit of a page of the navigation message) is received. In the following, these measurements will collectively be referred to as the ranging measurements, although it will be appreciated that in some examples not all these measurements need to be computed.

As a result, the tracking module 122 is configured to output a decoded navigation message 123 and ranging (pseudorange) measurements 124 for a corresponding correlation peak. Referring back to Fig. 1, the outputs of the A/T channel 120 (navigation message 123, ranging measurements 124) are fed to a data processing module 13, which can be a PVT module, or any other module configured to process (or "consume") the outputs, such as a logging or archiving system, a visualization system, a communication system configured to transmit the data, e.g. in the form of differential corrections. A PVT module can comprise a PVT engine configured to compute position, velocity and/or time of the receiver 10 based on the ranging measurements and navigation messages obtained from a plurality of satellites. In some examples, the data processing module 13, e.g. the PVT module, can be configured to compute navigation equations based at least on the ranging measurements.

In most cases, only one significant correlation peak is present in the Doppler/delay space. Under strong multipath conditions though, reflected signals may lead to additional correlation peaks at the same Doppler but larger delays as the line-of-sight (LOS) peak, as known in the art. When the navigation signal is spoofed, this may also lead to multiple correlation peaks being present, one relating to the authentic signal and at least another one to the spoofed signal. In some examples, a combination of multipath conditions and spoofing may occur, leading to a higher number (more than two) correlation peaks.

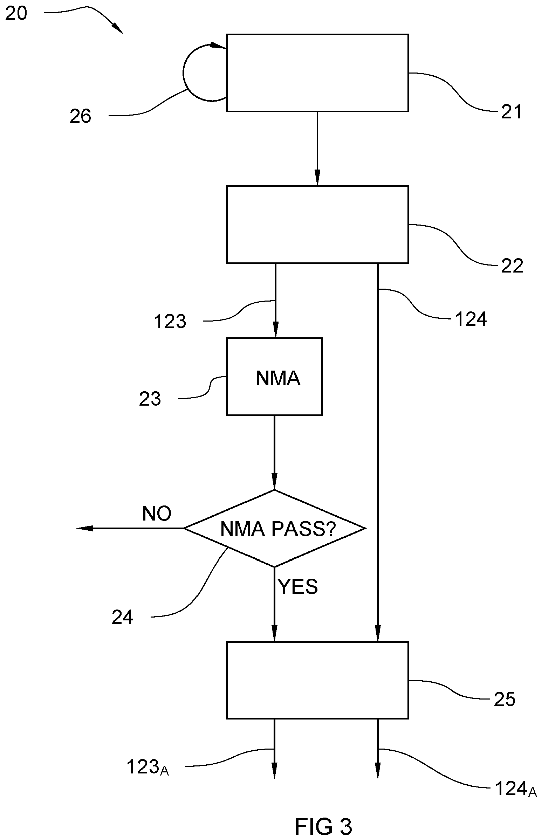

For any of these cases, methods according to the present disclosure allow to detect any spoofed correlation peaks, which can be discarded, while still finding the authentic correlation peak. Referring to Fig. 3, a method 20 according to the present disclosure comprises a first operation 21 to scan the Doppler/delay search space of a sampled navigation signal to detect at least one correlation peak for a PRN code associated with a respective GNSS satellite. To find a correlation peak, correlations are performed of the sampled navigation signal with instances of a local replica of the PRN code that are shifted in frequency (Doppler) and/or time with respect to one another, so as to cover parts of the Doppler/delay search space. A correlation peak refers to such a correlation having an amplitude above a predetermined acquisition threshold. As will be described in the embodiments below, the operation 21 can be carried out in parallel for different coordinates of the Doppler/delay search space, sequentially, or a combination of parallel and sequentially.

In operation 22, the correlation peak found in operation 21 is assigned to a tracker and the navigation message 123 associated with the correlation peak is decoded. The Doppler shift and time delay associated with the correlation peak detected in operation 21 is fed to operation 22, which can comprise tracking the Doppler shift in a phase-lock loop (PLL) and the time delay in a delay-lock loop (DLL) as known in the art. In addition, ranging measurements 124, including one or more of time of arrival (range), carrier phase, carrier-to-noise and range rate are advantageously computed from the correlation peak and the navigation message.

In operation 23, as a first part of spoofing detection operations according to the present disclosure, the navigation message 123 is authenticated. Any technique allowing to authenticate (at least some bits of) the navigation message 123 can be suitable for this operation. Advantageously, operation 23 comprises generating authentication data related to the navigation message and validating the authentication data, such as through a navigation message authentication (NMA) technique. In some examples, the navigation message (or the navigation signal) comprises predictable bits and unpredictable bits, e.g. a bit sequence that cannot be deduced from previously-received bits, without knowledge of the relevant cryptographic key, and the authentication data is generated based at least on the unpredictable bits. In some examples, the authentication data corresponds with the unpredictable bits. The authentication data can additionally comprise time information associated with the navigation message. In some examples, the authentication data is validated based on a cryptographic key that is transmitted with (and extracted from) the navigation signal, e.g. the cryptographic key is transmitted after a time delay. One example of this technique is OSNMA as known for the Galileo E1 navigation signal. In other examples, the cryptographic key is obtained from another navigation signal, transmitted from the same satellite or from a different satellite (as known e.g. from EP 3019891 A1), the cryptographic key can be built-in in the navigation receiver, or the cryptographic key can be obtained from an authentication centre (as known e.g. from EP 2708917 A1). It will be appreciated that the authentication data can be validated locally by the receiver, or at an authentication centre.

In operation 24, a check is performed whether the authentication test of operation 23 is passed. When a navigation message associated with a correlation peak passes the authentication test of operation 23, the navigation message 123 is fed to operation 25. The associated ranging measurements 124 can be unconditionally fed to operation 25. Alternatively, the ranging measurements 124 can be fed to operation 25 only if the authentication test of operation 23 is passed.

A correlation peak associated with a navigation message that does not pass the authentication test of operation 23 is discarded. This enables to block ranging measurements and navigation messages from a spoofer signal and avoids that these are fed to or utilized in the data processing module 13.

However, the navigation message authentication of operation 23 typically cannot detect meaconing attacks in which a navigation signal is rebroadcasted with a time delay. Whereas in prior art solutions, upon failing a navigation message authentication test, the navigation signal of the particular satellite is excluded from any downstream data consumption process, the present disclosure presents a further refinement to find the authentic correlation peak associated with the same navigation signal. As shown by the recursive loop 26, operation 21 is carried out anew to search the Doppler/delay space and find another correlation peak for the same navigation signal. Operations 22-24 are carried out on the new correlation peak that is found, and if the corresponding navigation message passes the authentication test (e.g., if the check of operation 24 succeeds), the corresponding navigation message 123 and ranging measurements 124 are fed to operation 25. Recursive loop 26 is advantageously carried out irrespective of the outcome of operation 24.

In operation 25, a selection is made among the correlation peaks with authenticated navigation message to determine the authentic correlation peak. According to the present disclosure, the authentic correlation peak is selected based on a ranging criterion applied to the ranging measurements 124 associated with the plurality of correlation peaks whose associated navigation messages passed the authentication test (operations 23 and 24). Various suitable ranging criteria may be utilized in operation 25 to determine the authentic correlation peak. Advantageously, the ranging measurements 124_{A} corresponding with a shortest range (or shortest pseudorange) are selected and the associated correlation peak is determined to be the authentic correlation peak. The "shortest pseudorange" criterion is especially advantageous when the navigation message comprises non-predictable navigation pages. Alternatively, operation 25 can comprise checking the ranging measurements against the ranging measurements of navigation signals received from other satellites, or against a predetermined (expected) range interval, or checking a time of arrival of a bit of the respective navigation message, or navigation signal, against a predetermined (expected) time window, or a combination thereof. If the time of arrival of the bit falls within the predetermined time window, the associated correlation peak is selected as authentic. The time window can e.g. be determined as defined in US 11119221. Likewise, if the ranging measurement falls within the expected range interval, the associated correlation peak is selected as authentic. There are many known ways to estimate the expected range. For example, if the receiver position is known approximately, the expected range can be computed. An approximate receiver position can be obtained from external sensors (e.g. an inertial system) or from known receiver properties (e.g. the receiver is static). The ranging measurements 124_{A} and navigation message 123_{A} corresponding with the authentic correlation peak are output by the A/T module 12, and optionally fed to the data processing module 13, e.g. for PVT computations or other data consumption process. One advantage of utilizing the shortest range criterion, is that it can be applied without needing any external aid. It will be appreciated that other suitable ranging criteria can be contemplated for operation 25.

According to the present disclosure, various modes for carrying out methods 20 are contemplated. In a first mode, the A/T channel 120 is configured to perform a parallel search for multiple correlation peaks, e.g., operations 21/26, and possibly operations 22-23 are performed in parallel. In a second mode, the search of the authentic peak is performed sequentially, e.g., the loop 26 is triggered only after a chain of operations 21-24 has been performed. In the latter example, advantageously, the loop 26 is performed irrespective of the outcome of the operation 24. It will be appreciated that a combination of parallel and sequential operations 21-26 is possible as well.

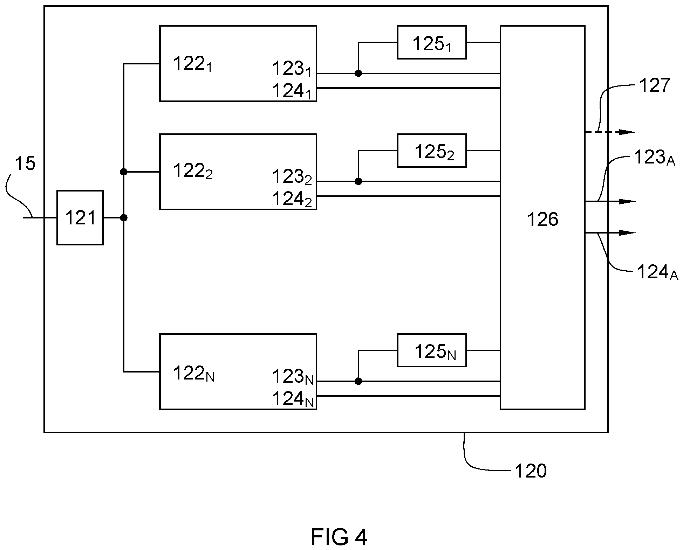

Referring to Fig. 4, in a parallel processing mode, the A/T channel 120 comprises N trackers 122₁, 122₂, ... , 122_{N} (N ≥ 2 being a design parameter) configured to operate in parallel. The acquisition module 121 is configured to scan the relevant Doppler/delay search space to find up to N correlation peaks associated with a same navigation signal (e.g., a same PRN code local replica). All of these N correlation peaks may e.g. exceed the acquisition threshold. To each correlation peak 1, ..., N, a tracker 122₁ - 122_{N} is assigned that is configured to track the respective correlation peak. The N trackers run in parallel and independently. Each tracker is configured to determine ranging measurements (124_{i,i=1...N}) and to decode a navigation message (123_{i,i=1...N}) associated with the corresponding correlation peak. It will be appreciated that the navigation messages decoded by the different trackers are not necessarily the same. In particular, trackers locked to a spoofing correlation peak will decode a navigation message that is forged by the spoofer. It may differ from the authentic navigation message, or it may be a delayed version of it (in case of a meaconing signal).

It will be appreciated that acquisition module 121 can be configured to scan the Doppler/delay search space sequentially, or can have multiple parallel correlators to scan the Doppler/delay search space at least partially in parallel.

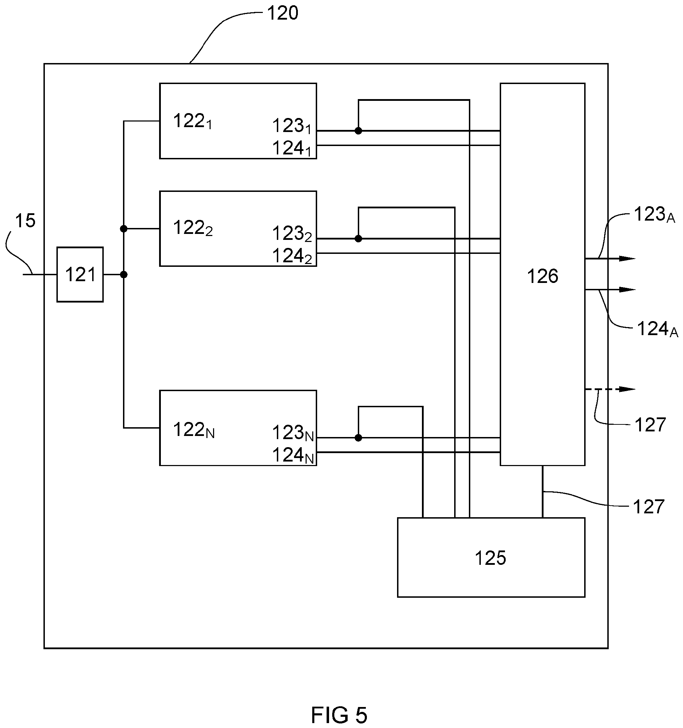

In a next operation, all the navigation messages 123_{i,i=1...N} are authenticated, e.g. by validating authentication data obtained from the navigation messages. Navigation message authentication can be performed by NMA modules 125_{i,i=1...N}, each associated with a respective tracker 122_{i,i=1...N}, as illustrated in Fig. 4. Alternatively, referring to Fig. 5, a single NMA module 125 can be provided, e.g. that operates at high speed, to perform authentication of the different navigation messages 123ᵢ sequentially and to output a tracker identifier signal 127, identifying the trackers with valid navigation message 123ᵢ.

The output of trackers 122ᵢ, i.e., the navigation messages 123ᵢ and the ranging measurements 124ᵢ, together with the output of the NMA modules 125ᵢ (or of NMA module 125 in Fig. 5), are provided to a selector module 126. Selector module 126 is configured to select the authentic correlation peak (navigation message 123_{A} and ranging measurements 124_{A}) based on the following criteria:
- identify the set of correlation peaks (trackers 122ᵢ) with valid NMA data; and
- apply a range criterion to the ranging measurements 124ᵢ output from trackers 122ᵢ having valid NMA data to select the authentic correlation peak.
The navigation message 123_{A} and ranging measurements 124_{A} associated with the authentic correlation peak (selected tracker) are output from selector module 126 and can be fed to the data processing module. If no correlation peaks with valid NMA data are found, the selector module can be configured to block any output of the navigation message 123_{A} and/or ranging measurements 124_{A}, or to flag any one or both navigation message 123_{A} and/or ranging measurements 124_{A} for not being authentic. In the latter case, the flag, which may be an identifier 127 representative of an output of the NMA module 125, will enable the downstream process to decide how to deal with this non-authentic data, e.g. whether to use it or not in PVT computations.

Selector module 126 can be configured to apply any suitable range criterion, e.g. as already indicated previously. The range criterion implemented in selector module 126 is advantageously the smallest pseudorange, i.e. a correlation peak associated with a navigation signal with the smallest delay. This criterion ensures that the line-of-sight (LOS) signal is found in case of reflected correlation signals and/or that the non-spoofed component is found in case of a re-radiation (meaconing) attack. Another advantage of the latter range criterion is that it does not require signals from other satellites, e.g. as compared to the TOA time window criterion as indicated previously. The operations performed by a tracking channel according to the invention are summarized below.

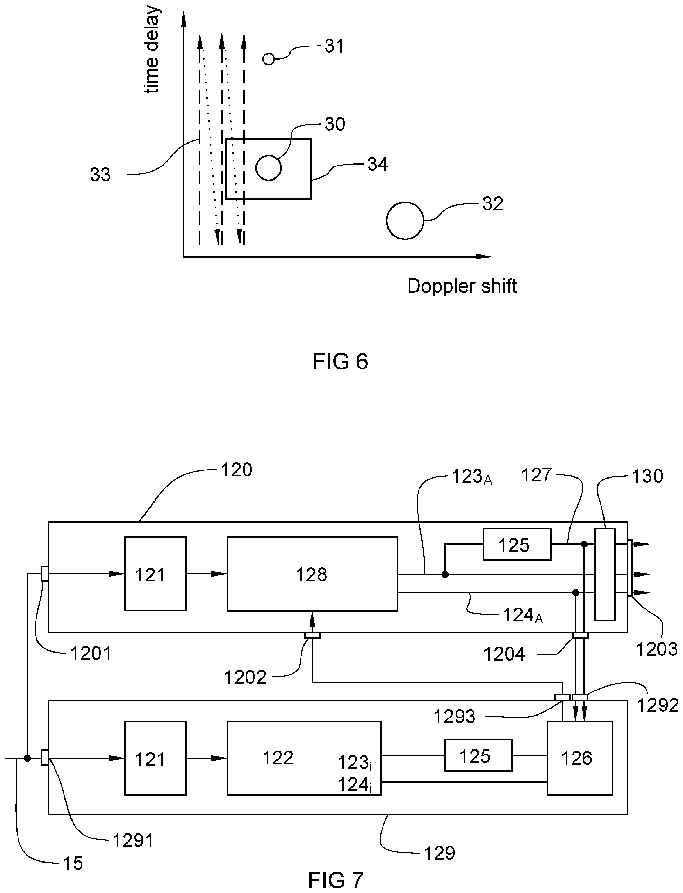

It is advantageous to scan the Doppler/delay search space of the navigation signal of interest continuously to uncover new correlation peaks, e.g. in correlation module 121, with new trackers 122ᵢ being assigned as new correlation peaks are found. If more than N peaks are found, a criterion may be applied to select N correlation peaks for assigning to the N available trackers, e.g. based on the highest peak amplitude. Referring to Fig. 6, three correlation peaks 30-32 are illustrated as white circles, with the diameter of the circles representing peak amplitude, with a larger circle corresponding with a stronger received signal. Correlation peak 30 is illustrative of the authentic peak; correlation peak 31 is illustrative of a reflection of the authentic signal and correlation peak 32 is illustrative of a spoofing signal.

The method implemented by the parallel architecture of Figs. 4 and 5 is illustrated by the flowchart of Fig. 3, in which loop 26 is executed continuously, e.g. until N correlation peaks exceeding the acquisition threshold are found. Operation 22 corresponds with the operation of the parallel trackers 122_{i,i=1...N}. Operations 24 and 25 correspond jointly with the operations of the selector module 126 receiving navigation messages 123ᵢ and ranging measurements 124ᵢ for each of the i = 1, ..., N correlation peaks as well as the outcome of the NMA test from operation 23, which is advantageously implemented in the NMA module(s) 125ᵢ / 125.

One advantage of the parallel architecture of Figs. 4 and 5 above is the speed at which the correct peak is identified, as all the peaks are tracked in parallel. Its disadvantage is the increased complexity of the tracking channel hardware and/or software, which need to contain multiple instances of a tracker, and which must track all peaks in parallel.

Referring to Fig. 7, in a sequential processing mode, a first A/T channel 120, referred to as tracking channel, is configured to track a correlation peak of a navigation signal of a given satellite in a tracker 128, which may be identical to a tracker 122ᵢ as described previously, and output decoded navigation message 123_{A} and ranging measurements 124_{A} related to the tracked correlation peak, and possibly feed them to the data processing module. A/T channel 120 advantageously comprises a NMA module 125. NMA module 125 is configured to authenticate the navigation message 123_{A} decoded by tracker 128, and to output an authentication test identifier 127 indicative of whether the navigation message 123_{A} passes or fails the authentication test implemented in NMA module 125. Identifier 127 can be a flag for navigation message 123_{A}.

A/T channel 120 can further comprise a gate 130, receiving as input 123_{A}, 124_{A} and 127. Gate 130 can be configured to decide, e.g. based on the value of identifier 127 whether to output any one or all of the navigation message 123_{A}, the ranging measurements 124_{A}, and the identifier 127. In some examples, based on 127 (i.e., the output of the NMA module 125), gate 130 can be configured to block outputting data 123_{A} and 124_{A} to prevent the data from being utilized in any downstream process. Alternatively, gate 130 can be dispensed with and navigation message 123_{A} and ranging measurements 124_{A} may be output by A/T channel 120 along with identifier 127, irrespective of the value of identifier 127 (i.e., irrespective of the outcome of the authentication test performed by NMA module 125). In the latter case, the downstream process can be configured to decide whether to continue to consume the data 123_{A} and 124_{A} or not based on the identifier 127.

A/T channel 120 can be configured to continue tracking the correlation peak, e.g., modules 121 and 128 may continue to operate, irrespective of the output of NMA module 125.

A second A/T channel is implemented as a monitoring channel 129 configured to scan the Doppler/delay search space of the navigation signal assigned to (tracked by) A/T channel 120 and sequentially track all the different correlation peaks for the navigation signal to select the authentic correlation peak. Monitoring channel 129 is configured to inform the tracking channel 120 if it has found a peak more likely to be authentic. In response, tracking channel 120 is configured to switch to the newly found authentic peak and to track the new peak.

Monitoring channel 129 can comprise an acquisition module 121 configured to scan the Doppler/delay search space of the navigation signal of interest and find correlation peaks exceeding a predetermined acquisition threshold, e.g. by performing correlation operations. A tracker 122 is configured to track the correlation peak, decode the associated navigation message 123ᵢ and determine ranging measurements 124ᵢ associated with the correlation peak. NMA module 125 is configured to authenticate the navigation message 123ᵢ decoded by tracker 122, and pass the outcome to selector module 126. If the navigation message 123ᵢ passes the authentication test, selector module 126 is configured to verify whether the associated correlation peak is more likely to be an authentic peak compared to the correlation peak that is currently tracked in tracking channel 120. Module 126 can be configured to apply a range criterion to the ranging measurements 124ᵢ and particularly check whether the ranging measurements satisfy the range criterion and/or whether the ranging measurements 124ᵢ are more likely to correspond to an authentic correlation peak compared to the correlation peak tracked in tracking channel 120. To do so, selector module 126 can be fed with the ranging measurements 124_{A} determined by the tracking channel 120. If so determined, selector module 126 can be configured to inform tracking channel 120 that a better correlation peak has been found and feed the new navigation message 123ᵢ and ranging measurements 124ᵢ to the tracking channel 120 and tracking channel 120 is configured to track the latter correlation peak, e.g., by switching the PLL and DLL to the better peak. The monitoring channel 129 hence advantageously takes over computing effort to find the authentic peak from the tracking channel 120, allowing tracking channel 120 to operate more efficiently. It will be appreciated that tracker 122 in principle need only to determine those ranging measurements allowing to apply the range criterion. If the range criterion applied is the "shortest pseudorange", only the pseudorange needs to be determined by tracker 122. This saves in processing speed of tracker 122.

Still referring to Fig. 7, it can be seen that the monitoring channel 129 comprises a first input 1291 configured to receive a sampled IF signal 15. If acquisition module 121 is not part of the monitoring channel, carrier phase, phase rate (Doppler) and delay value of a correlation peak found by an (external) correlator in the sampled IF signal 15 can be additionally input at 1291. The monitoring channel 129 further comprises a second input 1292 to receive ranging measurements 124_{A} output by tracker 128 and identifier 127 output by NMA module 125 of the tracking channel 120. Input 1292 is fed to selector module 126 which is configured to determine whether the correlation peak tracked by tracker 122 is a better (i.e., "more" authentic) peak compared to the correlation peak tracked by the tracking channel 120. Monitoring channel 129 comprises an output 1293 for providing at least one of carrier phase, phase rate (Doppler) and delay value of the better peak to the tracking channel.

The tracking channel 120, in turn comprises a first input 1201 which may be same as the input 1291 of the monitoring channel and a second input 1202, coupled to the output 1293 of the monitoring channel to receive the at least one of carrier phase, phase rate (Doppler) and delay value of the better peak. The tracking channel further comprises a first output 1203 to output navigation message 123_{A}, ranging measurements 124_{A} and identifier 127, and a second output 1204 coupled to the second input 1292 of the monitoring channel 129 to provide the current ranging measurements and output of the NMA module 125 of the tracking channel 120 to the selector module 126. Tracker 128 is configured to switch the PLL and the DLL to the better peak if a carrier phase, phase rate (Doppler) and delay value of the better peak is provided at input 1202.

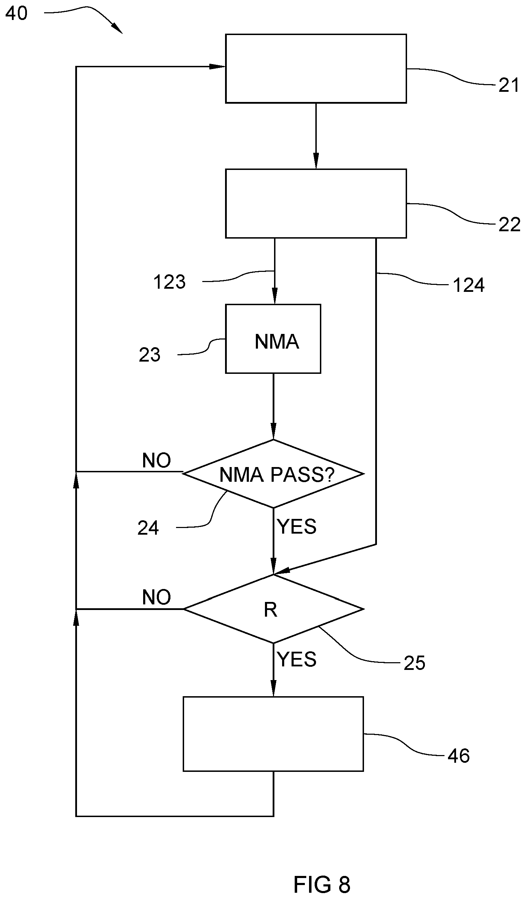

Referring to Fig. 8, an operating method 40 to select the authentic correlation peak as implemented in the monitoring channel 129 can comprise an operation 21 to find, for a navigation signal of interest, at least one correlation peak above a predetermined acquisition threshold. Operation 21 can be performed by the acquisition module 121 of the monitoring channel 129. Several ways are possible to scan the Doppler/delay space in the monitoring channel 129 to find a (new) correlation peak. In one example, the Doppler/delay search space is scanned to identify N (N ≥ 2) correlation peaks relating to a same navigation signal of a given satellite. If more than N correlation peaks are found, those with highest amplitude can be selected. In an alternative example, the monitoring channel 129 (acquisition module 121) is configured to sequentially scan the Doppler/delay space in operation 21, e.g. to find a first correlation peak above the acquisition threshold and only continue scanning to find a new correlation peak when receiving signal from operations 24, 25 or 46 to do so, as will be described further.

Referring to Fig. 6, it is advantageous to scan the Doppler/delay search space from low delays to large delays, at increasing levels of Doppler shift, as illustrated by the dashed line arrows 33, to maximize the chance to find the authentic LOS correlation peak 30 within the shortest search time. Other suitable scan patterns can be contemplated in the alternative.

To quickly react to the onset of coherent spoofing attacks, it is particularly advantageous to continuously scan a region or window 34 of the Doppler/delay space around the currently selected authentic correlation peak 30. Alternatively, to optimize detection of coherent spoofing attacks, a predetermined Doppler/delay region around the currently selected authentic correlation peak 30 is scanned first, before extending the region to the full Doppler/delay space.

Operation 21 feeds one correlation peak at a time, e.g. sequentially, to operation 22. In case N correlation peaks are found, the N correlation peaks are fed one at a time to operation 22 in a predetermined order, e.g. in descending amplitude order, or in the order in which the peaks have been found, or in any other suitable order.

In operation 22, tracker 122 of monitoring channel 129 tracks the correlation peak fed to it by operation 21, to decode the associated navigation message 123 and determine ranging measurements of interest, i.e. at least those ranging measurements required for operation 25 described further below.

In operation 23, the navigation message 123 is authenticated through a suitable authentication technique, e.g. as implemented by NMA module 125. In operation 24, if the authentication test of operation 23 fails, the navigation message is considered spoofed, and the correlation peak is discarded. The method 40 returns to operation 21 to feed the next correlation peak to operation 22. If the authentication test of operation 23 succeeds, the method proceeds to operation 25, in which a range criterion is applied to the ranging measurement(s) to determine whether a better peak has been found compared to the current correlation peak tracked by the tracking channel 120. The candidate peak is a better peak if it is more likely to be an authentic correlation peak. If the tracking channel 120 is currently tracking a peak with valid NMA data, a correlation peak with valid authentication data of the associated navigation message and e.g. lower pseudorange, or earlier TOA, is considered more authentic. If the tracking channel is currently tracking a peak for which the NMA failed, any correlation peak for which the NMA succeeded can be considered more authentic, regardless of the range criterion, which may not need to be applied. In operation 46, if a better peak is found by operation 25, the tracking channel 120 is informed and information allowing to track the newly found authentic correlation peak is provided by the monitoring channel 129 to the tracking channel.

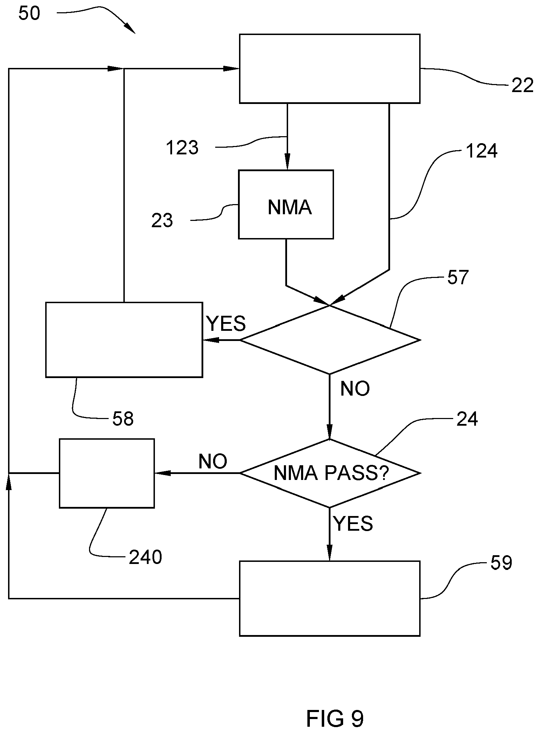

Referring to Fig. 9, upon being informed that a better peak candidate is available, the tracking channel 120 can be configured to switch to this new peak. The chain of operations of the tracking channel 120 can be described according to the following method 50. In operation 22, the current correlation peak is tracked, involving decoding the associated navigation message 123 and determining ranging measurements 124, e.g. for use in a PVT engine or any other data consuming process. In operation 23, the navigation message 123 is authenticated, e.g., by any of the methods described previously, such as by validating authentication data associated with the navigation message. In operation 57, it is checked whether a better correlation peak is received by the monitoring channel 129 (e.g. as provided by operation 46 in Fig. 8), i.e. if a new correlation peak is selected as the authentic peak. If the monitoring channel 129 has found a better peak, the method proceeds to operation 58 in which the tracker 128 is made to switch to the better correlation peak, and further proceeding to operation 22 to tracking the better correlation peak. Operation 58 can comprise providing at least the phase rate (Doppler) and the delay value of the better peak to the tracking channel 120 (tracker 128), which from then on will track that peak.

If, in operation 57, no better peak was received, the method proceeds to operation 24 to check whether the navigation message authentication test in operation 23 succeeded. If it did not succeed, the method proceeds to operation 240, in which the navigation message 123 and possibly the ranging measurements are flagged as not having passed the authentication test, or alternatively any one or both of these measurements is blocked from being output by the tracking channel 120. This state may persist until in operation 24 the authentication test succeeds. Otherwise, if the authentication test of operation 24 succeeds, the method proceeds to operation 59 in which the navigation message and ranging measurements obtained from operation 22 are output by the tracking channel 120. It will be appreciated that, alternatively, in operation 59 the navigation message 123 and/or the ranging measurements 124 may be flagged as being "authentic", instead of (or in addition to) the flagging in operation 240.

It will be appreciated that operation 22 is advantageously run regardless of the outcome of operation 24, i.e. the correlation peak is tracked continuously. It is hence possible for the tracking channel 120 to track a correlation peak with invalid authentication data until a correlation peak with valid authentication data has been found. If the tracking channel is currently tracking a peak for which the NMA failed, any correlation peak for which the NMA succeeded can be considered more authentic, possibly regardless of the range criterion. In some examples, if the test of operation 24 is negative (NMA failed), and no other correlation peak is available for the given navigation signal, operation 240 may still provide the navigation message and ranging measurements as output of the tracking channel, instead of blocking them, possibly along with a flag indicative that the navigation message authentication failed. One advantage of the present disclosure however, is that the operations of the monitoring channel will actively search for the authentic (or at least a better) peak, instead of having the tracking channel just iterate on a wrong peak and waiting until the spoofing condition stops.

A dedicated monitoring channel 129 can be associated to each tracking channel 120 of a receiver (e.g., of A/T module 12), and each tracking channel can be configured to track a distinct navigation signal. Alternatively one or more monitoring channels can sequentially be associated to all the tracking channels. When a monitoring channel has completed the scan of the Doppler/delay space corresponding to the navigation signal and satellite tracked by one tracking channel, it switches to the navigation signal and satellite of another tracking channel, for example to the tracking channel that has not been monitored for the longest time.

In the sequential mode as described in relation to Figs. 7-9, the requirements in terms of hardware and software typically do not exceed those of a traditional GNSS receiver, since one of the existing tracking channels may be implemented as the monitoring channel. In some examples, M out of the N available hardware channels, e.g. of A/T module 12, can be operated as monitoring channels to monitor the Doppler/delay space of the N-M other hardware channels, which are operated as tracking channels.

Referring again to Fig. 1, the A/T module 12 can feed the navigation message and ranging measurements relating to a selected correlation peak of a given navigation signal to the data processing module 13 along with a flag or alert indicative of the status of the authentication (e.g., NMA failed or NMA succeeded). The data processing module 13, such as a PVT module, can use or reject the ranging measurements in its data consumption process (e.g. in the PVT engine), according to one of the following possible operation modes. In a first, "strict" mode, the data processing module is configured to only use ranging measurements from a correlation peak for which message authentication is complete. This can be implemented by the A/T module (selector module 126 in Figs. 4-5 or tracking channel 120 in Fig. 7) feeding only ranging measurements to the data processing module for which NMA is complete and succeeded, or alternatively by flagging ranging measurements for which NMA is not yet complete (or failed), and the data processing module is configured to discard the flagged ranging information. In a second, "loose" mode, the data processing module is configured to use a ranging measurement - as soon as it is available - and until navigation message authentication fails. As the navigation message authentication procedures may take some time (for example a few tens of seconds for Galileo OSNMA), the "loose" mode may yield a faster PVT computation, at the expense of an increased exposure to a spoofing risk when authentication is ongoing. In any case, the data processing module may be configured to raise a flag or alert to inform users of the status of the authentication.

Although in the foregoing disclosure examples have been described in relation to GNSS systems, it will be appreciated that methods and devices according to the present disclosure can be applied to other kinds of navigation systems, such as terrestrial navigation systems. In such case, the navigation signals are not transmitted by satellites, but by terrestrial transmitting beacons.

## Claims

1. Method (20, 40) of identifying an authentic navigation signal, the method comprising:
detecting (21), in a sampled navigation signal, a plurality of correlation peaks for a pseudorandom noise code replica associated with a respective navigation beacon, preferably the navigation beacon being a navigation satellite,
decoding (22) navigation messages (123) associated with the plurality of the correlation peaks,
authenticating (23) the navigation messages, and based on a plurality of the navigation messages being found authentic, selecting (25) the correlation peak associated with one of the authentic navigation messages as an authentic correlation peak based on a range criterion applied to ranging measurements (124) determined from correlation peaks associated with the authentic navigation messages.

2. Method of claim 1, further comprising tracking the authentic correlation peak and determining ranging measurements from the authentic correlation peak, and supplying the ranging measurements determined from the authentic correlation peak and the navigation message associated with the authentic correlation peak as an output, preferably the ranging measurements comprising at least one of a carrier phase, a phase rate and a time delay value.

3. Method of claim 1 or 2, wherein detecting the plurality of correlation peaks and decoding and authenticating the navigation messages is performed continuously irrespective of at least one of the navigations messages being found authentic, or irrespective of whether one of the plurality of correlation peaks is selected as the authentic correlation peak.

4. Method of any one of the preceding claims, further comprising, based on none of the plurality of the navigation messages being found authentic, flagging at least one of the navigation messages and/or associated ranging measurement.

5. Method of any one of the preceding claims, wherein authenticating the navigation messages comprises, for each of the navigation messages determining authentication data based on one or more attributes of the respective navigation message and validating the authentication data, preferably based on a cryptographic key, preferably wherein the cryptographic key is obtained from a data sequence obtained from the navigation signal or the navigation beacon, or from a source external to the navigation beacon.

6. Method of any one of the preceding claims, wherein the range criterion is based on a shortest range and/or an earliest time of arrival of a portion of the navigation signal.

7. Method of any one of the preceding claims, wherein decoding the navigation messages and preferably authenticating the navigation messages, is performed for the plurality of the correlation peaks in parallel.

8. Method of any one of the claims 1 to 6, wherein decoding the navigation messages and preferably authenticating the navigation messages, is performed for the plurality of the correlation peaks sequentially.

9. Method of any one of the preceding claims, wherein detecting the plurality of correlation peaks comprises scanning a Doppler shift and time delay search space to determine correlation outputs, wherein the correlation peaks are selected based on an amplitude of the correlation outputs exceeding a predetermined threshold, preferably wherein the Doppler shift and time delay search space is scanned from smaller time delays to larger time delays and for increasing values of Doppler shift.

10. Method of the preceding claim, comprising scanning a window of the Doppler shift and time delay search space including the authentic correlation peak to determine correlation outputs, followed by scanning the Doppler shift and time delay search space outside the window.

11. Device (12) for identifying an authentic navigation signal, the device comprising processing circuitry (120) configured to carry out the method of any one of the preceding claims.

12. Device of the preceding claim, comprising:
an acquisition module (121) configured to receive, as input, a sampled navigation signal and to detect in the sampled navigation signal, a plurality of correlation peaks for a pseudorandom noise code replica associated with a respective navigation beacon, preferably the navigation beacon being a navigation satellite,
a tracking module (12) configured to track the plurality of correlation peaks, decode navigation messages (123) associated with the plurality of correlation peaks and determine ranging measurements (124) associated with the plurality of correlation peaks,
at least one authenticator module (125) configured to authenticate the navigation messages (123),
a selector module (126) configured to select the authentic correlation peak based on outputs of the tracking module and of the at least one authenticator module, preferably the selector module being configured to apply a range criterion on the ranging measurements associated with authenticated navigation messages.

13. Device of the preceding claim, wherein the tracking module comprises a plurality of tracking channels (122) configured to track the plurality of correlation peaks (30, 31, 32) in parallel.

14. Device of claim 12, wherein the tracking module (12) comprises a tracking channel (120) and a monitoring channel (129),
wherein the monitoring channel is configured to decode navigation messages (123) and determine ranging measurements (124) associated with the plurality of correlation peaks sequentially,
wherein the tracking channel (120) is configured to track a first one of the plurality of correlation peaks and to decode the associated navigation message (123_{A}) and to determine an associated ranging measurement (124_{A}),
wherein the tracking channel is configured to output the ranging measurement associated with the first one correlation peak to the selector module (126), the selector module being configured to select the authentic correlation peak based on applying the range criterion to the ranging measurement (124_{A}) output by the tracking channel and to the ranging measurements (124ᵢ) determined by the monitoring channel, and
wherein, based on the authentic correlation peak being different from the first one correlation peak, the monitoring channel is configured to supply attributes associated with the authentic correlation peak to the tracking channel, and the tracking channel being configured to track the authentic correlation peak based on the attributes.

15. Navigation receiver (10), comprising the device of any one of the claims 11 to 14.
